**Europäisches Patentamt**

**European Patent Office**

**Office européen des brevets**

(19)

(11) Veröffentlichungsnummer: **0 009 635**
**B1**

(12) # EUROPÄISCHE PATENTSCHRIFT

(45) Veröffentlichungstag der Patentschrift:
14.10.81

(21) Anmeldenummer: **79103244.4**

(22) Anmeldetag: **03.09.79**

(51) Int. Cl.³: **C 22 B 3/00**, C 22 B 15/08

(54) **Verfahren zur Herstellung von sulfidischen Kupferkonzentraten.**

(30) Priorität: **16.09.78 DE 2840424**

(43) Veröffentlichungstag der Anmeldung:
**16.04.80 Patentblatt 80/8**

(45) Bekanntmachung des Hinweises auf die Patenterteilung:
**14.10.81 Patentblatt 81/41**

(84) Benannte Vertragsstaaten:
**DE**

(56) Entgegenhaltungen:
**DE-A1-2 617 348**
**DE-B2-2 249 790**
**DE-C-126 396**
**DE-C-610 713**
**DE-C-680 519**
**DE-C-864 918**
**GB-A-1 418 610**
**US-A-3 957 602**
**US-A-4 094 754**

(73) Patentinhaber: **DUISBURGER KUPFERHÜTTE**
**Aktiengesellschaft, Werthauser**
**Strasse 220 Postfach 100103, D-4100 Duisburg 1 (DE)**

(72) Erfinder: **Piret, Norbert, Dipl.-Ing., Im Licht 12,**
**D-4100 Duisburg 25 (DE)**
Erfinder: **Höpper, Meinolf, Merremstrasse 21,**
**D-4100 Duisburg 1 (DE)**
Erfinder: **Kudelka, Herbert, Dr., Marienburger Ufer 25,**
**D-4100 Duisburg 26 (DE)**

(74) Vertreter: **Bünemann, Gerhard, Dr. et al, c/o Bayer AG**
**Zentralbereich, Patente Marken und Lizenzen,**
**D-5090 Leverkusen 1, Bayerwerk (DE)**

**0 009 635**

## Verfahren zur Herstellung von sulfidischen Kupferkonzentraten

Die vorliegende Erfindung betrifft ein Verfahren zur Herstellung von sulfidischen Kupferkonzentraten aus komplex zusammengesetzten sulfidischen Konzentraten, die neben Kupfer, Eisen und gegebenenfalls Edelmetallen mindestens eines der Nicht-Eisen-Metalle Zink, Blei, Nickel und Kobalt als Hauptbestandteil enthalten. Bei diesem Verfahren tritt keine wesentliche Säurebildung auf. In der Regel enthalten die Komplexkonzentrate außerdem Silber und Gold und weisen oft geringe Mengen an Cadmium, Arsen, Antimon, Quecksilber und/oder Wismuth auf.

Zur Aufarbeitung von Komplexkonzentraten sind eine Reihe von Verfahren bekannt, bei denen der metallurgische Aufschluß und die Trennung und Gewinnung von Kupfer, Zink, Blei, Nickel und/oder Kobalt — soweit vorhanden — pyrometallurgisch oder hydrometallurgisch vorgenommen werden.

So ist es bekannt, komplexe Kupfer-Zink-Konzentrate in einer konventionellen Kupferschmelze aufzuarbeiten. Dabei wird der Zinkinhalt des Konzentrats in die anfallende Schlacke überführt (Journal of Metals, 1955, Seiten 877 bis 884; Engineering and Mining Journal Vol. 158, No. 6, Seiten 82 – 88). In einer Variante werden die Komplexkonzentrate nach vorgeschalteter partieller Röstung in einem Elektroofen geschmolzen (Erzmetall, Band 4, 1951, Seiten 412 bis 418; Erzmetall, Band 22, 1969, H. Drei, Seiten 123 bis 131). Zur Gewinnung des Zinks aus den Schlacken wird in beiden Fällen die Schlacke unter stark reduzierenden Bedingungen verblasen, wobei Zink und vorhandenes Blei als Verblase-Mischoxyd ausgemacht werden. Dieses Verblasen der Schlacken ist aufgrund des hohen Brennstoffbedarfs sehr aufwendig. Darüber hinaus ist die Aufarbeitung des Verblase-Oxyds wegen seiner begleitenden Verunreinigungen kompliziert.

Nach dem Verfahren der DE-A-2 617 348 erfolgt in einem hydrometallurgischen Verfahren der Aufschluß mittels oxidierender Laugung mit Kupfer(II)-chlorid im chloridischen System. Kupfer, Zink, Blei und ein Teil des Eisens und des Silbers gehen dabei in Lösung. Die Kupfer- und Zinkextraktion aus der chloridischen Lösung erfolgt mittels Ionenaustauschern unter gleichzeitiger Oxidation des in der Lösung vorhandenen Kupfer(I)-chlorids. Die Gewinnung des Kupfers und des Zinks erfolgt elektrolytisch. Bei diesem Verfahren verbleiben die Edelmetalle Gold und ein Teil des Silbers im Elementarschwefel-haltigen Laugerückstand. Die erforderliche Oxidation mit Luft während des Kontaktierens der wäßrigen und der organischen Phase bei der Kupferextraktion führt zu erheblichen Verlusten an Verdünnungsmitteln der organischen Phase.

Gegenstand der vorliegenden Erfindung ist ein Verfahren zur Herstellung von sulfidischen Kupferkonzentraten aus komplex zusammengesetzten sulfidischen Konzentraten, die neben Kupfer, Eisen und gegebenenfalls Edelmetallen mindestens eins der NE-Metalle Zink, Blei, Nickel und Kobalt als Hauptbestandteil enthalten, welches dadurch gekennzeichnet ist, daß die komplex zusammengesetzten sulfidischen Konzentrate einer kupferhaltigen, vorwiegend chloridischen Lösung zugemischt werden, und die so erhaltene Suspension bei erhöhter Temperatur unter erhöhtem Druck und bei einem pH-Wert unter 3 behandelt wird.

Bei diesem Verfahren kann die kupferhaltige, chloridische Lösung entweder Kupfer (I) oder Kupfer(II) oder beide nebeneinander enthalten. Bei dem erfindungsgemäßen Verfahren wird das in den komplex zusammengesetzten sulfidischen Konzentraten — im folgenden Komplexkonzentrate genannt — anwesende Kupfer gemeinsam mit dem Schwefel und den gegebenenfalls vorhandenen Edelmetallen als Kupferkonzentrat, insbesondere als ein für die pyrometallurgische Aufarbeitung geeignetes Konzentrat gewonnen. Die begleitenden NE-Metalle Zink, Blei, Nickel und Kobalt, soweit im Komplexkonzentrat vorhanden, werden naßchemisch ausgebracht. Nur das im Komplexkonzentrat als Pyrit ($FeS_2$) vorhandene Eisen bleibt beim erfindungsgemäßen Verfahren mit dem Kupfer im Konzentrat zurück, während in sonstigen Mineralien gebundenes Eisen weitgehend mit den begleitenden NE-Metallen naßchemisch ausgebracht wird.

Das erfindungsgemäße Verfahren schließt die Möglichkeit einer naßchemischen Aufarbeitung des beim erfindungsgemäßen Verfahren hergestellten Kupferkonzentrates nicht aus. Aus wirtschaftlichen Gründen jedoch, speziell wenn das hergestellte Kupferkonzentrat edelmetallreich ist, stellt die pyrometallurgische Aufarbeitung nach dem erfindungsgemäßen Verfahren das geeignetste Verfahren zur Kupfer- und Edelmetallgewinnung aus dem hergestellten Kupferkonzentrat dar.

Bei dem erfindungsgemäßen Verfahren werden die vorhandenen NE-Metalle Zink, Blei, Nickel und Kobalt vorab mittels eines hydrometallurgischen Verfahrens abgetrennt, während ein gegebenenfalls edelmetallhaltiges Kupferkonzentrat, das sich besonders zur pyrometallurgischen Aufarbeitung eignet, anfällt. Das hydrometallurgische Verfahren zur Herstellung von Kupferkonzentraten aus Komplexkonzentraten besteht darin, die Komplexkonzentrate einer kupferhaltigen, vorwiegend chloridischen Lösung zuzumischen. Anschließend wird die so erhaltene Suspension bei erhöhter Temperatur unter erhöhtem Druck bei einem pH-Wert unter 3 so lange behandelt, bis unter gleichzeitiger, zumindest teilweiser Entkupferung der vorwiegend chloridischen Lösung durch Austauschreaktion zwischen den im Konzentrat vorhandenen NE-Metallen Zink, Blei, Nickel und Kobalt und dem in der Lösung befindlichen Kupfer ohne Auftreten einer wesentlichen Säurebildung eine weitgehende Entfernung dieser vorhandenen NE-Metalle aus dem Komplexkonzentrat stattgefunden hat. Das anfallende edelmetallhaltige Kupferkonzentrat wird bevorzugt durch eine Fest-Flüssig-Trennung, aus der ausreagierten Suspension abgetrennt, und die anfallende, zumindest teilweise von Kupfer befreite NE-metallhaltige Lösung vorzugsweise hydrometallurgisch zwecks Trennung und Reindarstellung der noch vorhandenen NE-Metalle aufgearbeitet.

Die bei dem erfindungsgemäßen Verfahren aufzuarbeitenden Komplexkonzentrate stammen in der Regel aus einer herkömmlichen Flotationsanlage zur Aufbereitung primärer Erze. Demzufolge weisen diese Komplexkonzentrate eine Kornverteilung auf, die den Bedingungen der vorgeschlagenen hydrometallurgischen Stufe des erfindungsgemäßen Verfahrens entspricht. Mineralogisch bestehen Komplexkonzentrate neben der Gangart aus sulfidischen Mineralien, die Kupfer, Eisen, Edelmetalle und mindestens eines der NE-Metalle Zink, Blei, Nickel und Kobalt enthalten. Bedeutende Mineralien sind z. B.: Chalkopyrit, Bornit, Covellin, Chalkosin, Sphalerit, Marmatit, Galenit, Pentlandit, Millerit, Heazlewoodit, Carrollit, Pyrit, Markasit und Pyrrhothin.

Nach dem erfindungsgemäßen Verfahren werden Komplexkonzentrate einer kupferhaltigen, vorwiegend chloridischen Lösung zugemischt. Unter vorwiegend chloridischer Lösung im Sinne der vorliegenden Erfindung wird eine Lösung, die mindestens so viel Chlorid enthält, daß das Redox-System $Cu^{2+}/Cu^+$ aufrecht erhalten wird, verstanden. Im Grenzfall muß die vorwiegend chloridische Lösung noch so viel Chlorid enthalten, daß entsprechend der Löslichkeit von Kupfer(I)-chlorid bei 25°C die Lösung mindestens noch eine Kupfer(I)-Konzentration von 1 g/l aufweist. Die kupferhaltige, vorwiegend chloridische Lösung kann das Kupfer entweder als zweiwertiges oder als einwertiges Kupfer enthalten oder jede beliebige Kombination dieser Ionen. Aufgrund der Abhängigkeit der CuCl-Löslichkeit von der Chlorid-Konzentration und von der Temperatur ist nicht ausgeschlossen, daß ein Teil des in der kupferhaltigen, vorwiegend chloridischen Lösung vorhandenen Kupfers als auskristallisiertes Kupfer(I)-chlorid vorliegt.

Die erhaltene Suspension wird dann auf die gewünschte Temperatur aufgeheizt und so lange bei dieser Temperatur gehalten, bis eine weitgehende Entfernung der NE-Metalle Zink, Blei, Nickel und Kobalt, soweit sie im Komplexkonzentrat vorhanden sind, stattgefunden hat.

Unter weitgehender Entfernung wird verstanden, daß die Restgehalte im anfallenden Reaktionsprodukt der NE-Metalle Zink, Blei, Nickel und Kobalt, soweit sie im Komplexkonzentrat vorhanden waren, so niedrig sind, daß einerseits die Anwesenheit dieser Restgehalte die nachgeschaltete Verarbeitungsstufe zur Gewinnung des Kupfers und der Edelmetalle nicht beeinträchtigt und die Verluste, die aufgrund der Anwesenheit dieser Restgehalte bei der pyrometallurgischen Kupfergewinnung auftreten, so niedrig sind, daß dadurch keine wirtschaftliche Belastung des Verfahrens entsteht.

Im Fall des Zinks und Bleis sollten die Restgehalte im anfallenden Reaktionsprodukt vorzugsweise unter 1% liegen. Der pH-Wert der erzeugten Suspension liegt unter 3, vorzugsweise unter 2,5.

Der während der Austauschstufe vorherrschende Druck entspricht mindestens dem bei der Reaktionstemperatur vorliegenden Wasserdampfdruck. In Anwesenheit von Fremdgasen, z. B. bei Zugabe eines sauerstoffhaltigen Gases, erhöht sich der Druck um die Menge des zugegebenen Fremdgases, z. B. bei Zugabe eines sauerstoffhaltigen Gases, erhöht sich der Druck um die Menge des zugegebenen Fremdgases.

Wird bei dem erfindungsgemäßen Verfahren eine kupferhaltige, vorwiegend chloridische Lösung eingesetzt, die edelmetallhaltig ist, werden die Edelmetalle vorteilhafterweise mit dem anfallenden Kupferkonzentrat ausgebracht. Die zumindest teilweise Entkupferung der zur Austauschreaktion verwendeten kupferhaltigen Lösung wird vorzugsweise weitgehend während der Austauschreaktion durchgeführt.

In einer besonderen Verfahrensdurchführung wird das Verhältnis des Gewichtes des zur kupferhaltigen, vorwiegend chloridischen Lösung zugesetzten, komplex zusammengesetzten Konzentrates zum Kupferinhalt der Lösung so eingestellt, daß die mittels Austauschreaktion zumindest teilweise entkupferte, vorwiegend chloridische Lösung, bei 60° C ein Potential von mindestens 400 mV (gegenüber der Wasserstoffelektrode) aufweist.

Besonders bevorzugt wird das erfindungsgemäße Verfahren so durchgeführt, daß praktisch keine Säurebildung stattfindet. Dies wird durch Einstellung des Verhältnisses von Kupfer(II) zu Kupfer(I) in der zur Austauschreaktion verwendeten, kupferhaltigen, vorwiegend chloridischen Lösung erreicht.

Die kupferhaltige, vorwiegend chloridische Lösung kann das Kupfer entweder als einwertiges oder zweiwertiges Ion oder als Mischung von beiden Ionen enthalten. Erfindungsgemäß wird das Verhältnis Kupfer(II) zu Kupfer(I) in der zur Austauschreaktion verwendeten, kupferhaltigen, vorwiegend chloridischen, Lösung so eingestellt, daß eine Säurebildung aufgrund der Nebenreaktionen des Schwefels praktisch nicht auftritt. Bei ca.. 200°C ist die Reaktionsgeschwindigkeit dieser Nebenreaktionen gegenüber den Hauptaustauschreaktionen gering. Der Austausch nach dem erfindungsgemäßen Verfahren ist daher entweder mit einer Kupfer(II)- oder einer Kupfer(I)-haltigen, vorwiegend chloridischen Lösung durchführbar. Das $Cu^{2+}/Cu^+$-Verhältnis in der Lauge wird daher so eingestellt, daß im Kupferkonzentrat Kupfer hauptsächlich als Kupfer(II)-sulfid oder als Kupfer(I)-sulfid vorliegt. Bei der Herstellung eines Kupfer(I)-sulfidhaltigen Konzentrats, ausgehend von einer Kupfer(I)-haltigen chloridischen Lösung, liegt der Kupfergehalt des Kupferkonzentrats höher als bei der Erzeugung eines Kupfer(II)-sulfidhaltigen Konzentrats, ausgehend von einer Kupfer(II) haltigen chloridischen Lösung. Die Weiterverarbeitung des Kupferkonzentrates kann

3

maßgebend für die Wahl des $Cu^{2+}/Cu^+$-Verhältnisses sein, insbesondere hinsichtlich des Schwefelinhalts des Kupferkonzentrats.

Bei der pyrometallurgischen Verarbeitung von Kupferkonzentraten ist ein Mindestschwefelgehalt im Konzentrat, z. B. für das autogene Schmelzen, erforderlich. Das hergestellte Kupferkonzentrat enthält als Schwefelträger neben den Kupfersulfiden gegebenenfalls noch den während des Austauschs inert gebliebenen Pyrit. Falls der Pyritinhalt des Komplexkonzentrats zu niedrig ist, ist es hinsichtlich der pyrometallurgischen Weiterverarbeitung des Kupferkonzentrats nicht sinnvoll, den Austausch bei einem niedrigen $Cu^{2+}/Cu^+$-Verhältnis durchzuführen, weil der Schwefelinhalt des dabei anfallenden Kupfer(I)-sulfidhaltigen Kupferkonzentrats zu niedrig ist. Das erfindungsgemäße Verfahren bietet also auch hinsichtlich der Weiterverarbeitung des hergestellten Kupferkonzentrats den Vorteil einer ausgesprochenen Flexibilität.

Auch hinsichtlich des Kupferbedarfs zur Durchführung der Austauschreaktionen des erfindungsgemäßen Verfahrens ist eine große Flexibilität durch Einstellung des $Cu^{2+}/Cu^+$-Verhältnisses gegeben, wie aus den Beispielen der Tabelle 1 zu ersehen ist.

Bei Versuch 1 mit einem sehr hohen $Cu^{2+}/Cu^+$-Verhältnis werden pro Tonne Komplexkonzentrat 0,24 t $Cu^{2+}$ in Lösung benötigt. Bei Versuch 4 mit einem sehr geringen $Cu^{2+}/Cu^+$-Verhältnis werden dagegen 0,37 t $Cu^+$ in Lösung benötigt.

Bei einer Temperatur oberhalb von 200°C, z. B. bei 250°C, ist die Reaktionsgeschwindigkeit der Nebenreaktionen nicht zu vernachlässigen. Um die Säurebildung so gering wie möglich zu halten, wird nach dem erfindungsgemäßen Verfahren das $Cu^{2+}/Cu^+$-Verhältnis niedrig gehalten. Die Versuche 2 und 5 der Tabelle 1 verdeutlichen den Effekt. Bei einem sehr hohen $Cu^{2+}/Cu^+$-Verhältnis beträgt die Säurebildung bei 250°C 240 kg $H_2SO_4$/t Konzentrat, bei einem sehr niedrigen $Cu^{2+}/Cu^+$-Verhältnis nur 90 kg $H_2SO_4$/t Konzentrat.

Die Kontrolle des $Cu^{2+}/Cu^+$-Verhältnisses in der kupferhaltigen, vorwiegend chloridischen Lösung erfolgt vorzugsweise mittels Potentialmessung.

Die Einstellung des $Cu^{2+}/Cu^+$-Verhältnisses erfolgt entweder durch Oxidation, wenn das $Cu^{2+}/Cu^+$-Verhältnis niedriger ist als das für das Austauschverfahren erwünschte Verhältnis, oder durch Reduktion, falls das $Cu^{2+}/Cu^+$-Verhältnis höher ist als gewünscht wird.

Als Oxidationsmittel kann Sauerstoff, ein sauerstoffhaltiges Gas oder Chlorgas unter gleichzeitiger Zugabe einer Säure zur Einhaltung des pH-Wertes verwendet werden. Das Oxidationsmittel zum Erhöhen des $Cu^{2+}/Cu^+$-Verhältnisses in der vorwiegend chloridischen Lösung wird vorzugsweise vor der Austauschstufe zugegeben. Es kann aber z. B. auch in die Austauschstufe selbst zugegeben werden.

Zur Durchführung dieser letzten Variante ist eine Kontrolle der Sauerstoffzudosierung notwendig um die gewünschte Oxidation von $Cu^+$ zu $Cu^{2+}$ und nicht die unerwünschte Oxidation von Sulfidschwefel zu Sulfatschwefel zu erreichen. Auch muß der Druckreaktor in diesem Fall so ausgelegt sein, daß der Sauerstoffpartialdruck in der Endstufe des Austauschreaktionsvorgangs genügend niedrig ist, um eine weitgehende Entkupferung der chloridischen Lösung zu ermöglichen. Dies ist z. B. möglich, wenn als Druckreaktor ein Durchflußreaktor oder ein Rohrreaktor ohne Suspensionsrührung verwendet wird.

Bei einem zu hohen $Cu^{2+}/Cu^+$-Verhältnis in der vorwiegend chloridischen Lösung, werden als Reduktionsmittel Metall(0)-haltige Vorstoffe, wie z. B. Zementkupfer, zinkhaltige Zementate aus der Laugenreinigung bei der elektrolytischen Zinkgewinnung oder Kugelmühlenstäube aus der Messingverarbeitung eingesetzt.

Es können auch sulfidhaltige Vorstoffe zur Reduktion von $Cu^{2+}$ zu $Cu^+$ eingesetzt, wie z. B. sulfidhaltige Materialien, wie Sulfidkonzentrate, Hüttenzwischenprodukte, wie Kupfer-Eisen-Stein usw.

Das erfindungsgemäß bevorzugte Reduktionsmittel ist das Kupfer(I)-sulfidhaltige, aus der Austauschreaktion stammende Kupferkonzentrat.

In der Tabelle 5 sind Versuche aufgeführt, in denen ein aus einem Austauschprozeß stammendes Kupfer(I)-sulfidhaltiges Kupferkonzentrat zur Reduktion einer Kupfer(II)-chloridhaltigen, vorwiegend chloridischen Lösung, verwendet wurde. Dabei wurden je nach zugegebenem Konzentratüberschuß 40 bis 30% des sulfidischen Kupfers gelaugt und 70 bis 100% des in der chloridischen Lösung vorhandenen zweiwertigen Kupfers zum einwertigen reduziert. Das gebildete Fällungsprodukt bestand röntgenographisch hauptsächlich aus Covellin (CuS) mit je nach Konzentratüberschuß unreagiertem Digenit ($Cu_9S_5$).

Die zur Austauschreaktion verwendete kupferhaltige, vorwiegend chloridische Lösung kann eine gewisse Sulfationen-Konzentration aufweisen. In diesem Fall wird die Bleilöslichkeit herabgesetzt. In diesem Fall bleibt das im Komplex zusammengesetzte, im sulfidischen Konzentrat vorhandene Blei als Bleisulfat im anfallenden sulfidischen Kupferkonzentrat zurück. Die Herstellung eines Kupferkonzentrats aus dem bleihaltigen Komplexkonzentrat nach dem erfindungsgemäßen Verfahren erfordert eine weitere Stufe. Zur selektiven Extraktion des Bleis wird dann das anfallende bleisulfathaltige sulfidische Kupferkonzentrat von der Aufarbeitung zur Kupfergewinnung und gegebenenfalls Edelmetallgewinnung einer heißen Laugung in konzentrierter chloridischer Lösung unter sauren und nicht oxidierenden Bedingungen unterworfen. Die selektive Extraktion erfolgt vorzugsweise bei einem pH-Wert zwischen 1,0 und 2,5, bei einer Temperatur zwischen 50 und 90 C und bei nicht-oxidierenden Bedingungen, um die Wiederauflösung von Kupfer und Silber zu unterdrücken.

Das gelöste Blei kann aus der chloridischen Lösung z. B. mit Soda als Bleikarbonat ausgefällt werden, oder kann als $PbCl_2$ auskristallisiert werden und anschließend zu metallischem Blei gemäß bekannter Methoden umgearbeitet werden.

Die Tabelle 6 faßt die Ergebnisse eines Versuchs zusammen, in dem ein Komplex-Cu-Zn-Pb-Konzentrat zur Herstellung eines Kupferkonzentrats mit einer kupfer- und sulfathaltigen, vorwiegend chloridischen, Lösung behandelt wird. Das dabei anfallende bleisulfathaltige Kupferkonzentrat wird in einer heißen Kochsalzlösung gelaugt. Dabei wurden 99% des Bleis ausgebracht. Während des Austauschvorgangs sind die Bedingungen so, daß sich aus dem im Komplexkonzentrat vorhandenen Bleisulfid (Galenit, PbS) in der sulfathaltigen, vorwiegend chloridischen Lösung im Kochsalz leicht extrahierbares Bleisulfat bildet und nicht, wie bei anderen bekannten Aufschlußverfahren, schwerlösliche Verbindungen, wie z. B. Bleijarosit.

Die erfindungsgemäß eingesetzte, kupferhaltige, vorwiegend chloridische Lösung kann mittels oxidierender Laugung der kupferhaltigen sulfidischen Konzentrate in einer chloridischen Lösung hergestellt werden. Als Oxidationsmittel wird hierfür Eisen(III)-chlorid, Kupfer(II)-chlorid, Sauerstoff bzw. ein sauerstoffhaltiges Gas oder Chlorgas verwendet. Vorzugsweise wird die zur Austauschreaktion verwendete chloridische Lösung mittels oxidierender Laugung eines Teils der beim Druckaustausch anfallenden Kupferkonzentrate in einer chloridischen Lösung hergestellt. Zur Herstellung der Lösung kann auch mindestens ein Teil der bei der Austauschreaktion anfallenden, zumindest teilweise von Kupfer befreiten NE-metallhaltigen chloridischen Lösung verwendet werden. Andererseits ist es auch möglich, hierfür aus der Aufarbeitung von Pyritabbränden mittels chlorierender Röstung bzw. chlorierender Verflüchtigung stammende Lösungen einzusetzen.

Die Austauschreaktion zwischen den im Konzentrat vorhandenen NE-Metallen Zink, Blei, Nickel und Kobalt und dem in Lösung befindlichen Kupfer wird bei einer erhöhten Temperatur durchgeführt. Die Temperatur wird in Abhängigkeit von der vorliegenden Korngröße des Konzentrates gewählt. Bei den üblichen Flotationskonzentraten ist eine Mindesttemperatur von ca. 180 C erforderlich. Diese Temperatur kann sich bis auf unter ca. 130 C erniedrigen, wenn die einzusetzenden Konzentrate einer Feinmahlung unterworfen werden. Vorzugsweise wird bei dem erfindungsgemäßen Verfahren bei einer erhöhten Temperatur von ca. 180 C bis 250 C, besonders bevorzugt von 200 C bis 220 C gearbeitet. Unter diesen Bedingungen dauert die erforderliche Reaktionszeit zum Erreichen einer weitgehenden Entfernung der vorhandenen NE-Metalle aus den komplex zusammengesetzten sulfidischen Konzentrationen ca. 1 Stunde. Diese Reaktionszeit läßt sich jedoch durch Einstellen der Temperatur variieren.

So läßt sie sich z. B. durch Erhöhung der Reaktionstemperatur von 200 C bis ca 250 C auf ca. 15 Minuten herabsetzen (Tabelle 3). Bevorzugt wird nach dem erfindungsgemäßen Verfahren die erforderliche Reaktionszeit durch Temperaturerhöhung soweit heruntergesetzt, daß die Austauschreaktion z B in einem Durchflußreaktor ohne eine Suspensionsrührung, z. B. einem Rohrreaktor erfolgen kann. Eingesetzt werden können jedoch auch z. B. kontinuierliche Mehrkammerrührautoklaven oder diskontinuierliche Einkammerautoklaven.

Das nach dem erfindungsgemäßen Verfahren aus Komplexkonzentrat hergestellte, gegebenenfalls edelmetallhaltige Kupferkonzentrat kann sowohl hydrometallurgisch als auch pyrometallurgisch aufgearbeitet werden. Die Vorteile der pyrometallurgischen Aufarbeitung wurden bereits erläutert. Die nach dem erfindungsgemäßen Verfahren aus Komplexkonzentraten hergestellten Kupferkonzentrate sind an sich relativ kupferreich und eisenreich, weil diese hauptsächlich entweder aus CuS oder aus $Cu_2S$ bestehen. Für kupferreiche Konzentrate ist von den pyrometallurgischen Verfahren der T.B.R.C. (Top Blown Rotary Converter)-Prozeß besonders geeignet.

Nach dem erfindungsgemäßen Verfahren werden Kupferkonzentrate, die von sonstigen NE-Metallen weitgehend befreit sind, aus Komplexkonzentraten hergestellt. Es ist für diesen Zweck notwendig, daß die für den Austausch zur Verfügung stehende kupferhaltige vorwiegend chloridische Lösung eine ausreichende Kupfermenge enthält. Das Verhältnis der Gewichtseinheit des zur vorwiegend chloridischen Lösung zugemischten Komplexkonzentrats zur Gewichtseinheit des in Lösung befindlichen Kupfers darf einen bestimmten Maximalwert nicht überschreiten, sonst wird die vorwiegend chloridische kupferhaltige Lösung vollständig entkupfert, ohne daß eine komplette Entfernung der NE-Metalle Zn, Pb, Ni und Co aus dem Komplexkonzentrat stattfinden kann. Dieser Maximalwert ist abhängig von der Konzentratzusammensetzung, von der Reaktionstemperatur und von der Wertigkeit des Kupfers in der vorwiegend chloridischen Lösung

In Abhängigkeit von der Konzentratzusammensetzung, der Reaktionstemperatur und der Wertigkeit des Kupfers in der vorwiegend chloridischen Lösung, ist der Maximalwert der Wert, der in der zumindest teilweise entkupferten Lösung nach der Austauschreaktion einen Potentialwert von 400 mV gegenüber der Wasserstoffelektrode, gemessen bei 60 C, liefert. Unter diesen Bedingungen ist noch eine Rest Kupferkonzentration von ca. 0,5 bis 1,0 g/l in der vorwiegend chloridischen Lösung nach der Austauschreaktion vorhanden

Obgleich das erfindungsgemäße Verfahren die Möglichkeit bietet, die Trennung des Kupfers von den sonstigen vorhandenen NE-Metallen sowohl in der vorwiegend chloridischen Lösung als auch im

5

0 009 635

Komplexkonzentrat gleichzeitig vorzunehmen, kann in gegebenen Fällen die Anwesenheit einer bestimmten Endkupferkonzentration in der vorwiegend chloridischen Lösung nach dem Austausch erwünscht sein. Dies ist z. B. der Fall, wenn das in der vorwiegend chloridischen Lösung als einwertiges Ion vorliegende Kupfer für die nachgeschaltete Zinkgewinnungs- und Eisenentfernungsstufe genutzt werden soll.

Vorzugsweise wird das Verfahren dann so durchgeführt, daß diese Lösung nur teilweise von Kupfer befreit ist, d. h. noch Kupfer(I)-chlorid enthält. In diesem Fall läßt sich eine Zinkextraktion mittels eines selektiven Kationenaustauschers unter gleichzeitiger Oxidation des einwertigen Kupfers mit einem oxidierenden Gas ermöglichen. Als oxidierendes Gas wird in diesem Falle ein sauerstoffhaltiges Gas verwendet. Bei einer solchen Verfahrensdurchführung ist es auch möglich, das während des Austauschs ausgelaugte Eisen unter Sauerstoffoxidation auszufällen, wobei wiederum eine gleichzeitige Oxidation des einwertigen Kupfers eintritt.

Den Einfluß des Mengenverhältnisses verdeutlichen die Ergebnisse der Tabelle 4.

In chloridischen Lösungen sind die Edelmetalle Silber und Gold z. T. löslich. Wenn eine vorwiegend chloridische Lösung, die Silber enthält, wie z. B. nach der Kupfer(II)-chlorid- oder Eisen(III)-chlorid-Laugung von sulfidischen Konzentraten, oder die Silber und Gold enthält, wie z. B. eine Lösung, die aus der Aufarbeitung von Pyritabbränden mittels chlorierender Röstung und Laugung stammt, nach dem erfindungsgemäßen Verfahren behandelt wird, wird der Edelmetallgehalt der Lösung zusammen mit dem Kupfer in das Kupferkonzentrat überführt. Der Entsilberungsgrad der Lösung hängt vom Entkupferungsgrad der Lösung ab. Nur bei einer vollständigen Entkupferung ist auch eine vollständige Entsilberung der chloridischen Lösung gegeben. Bei einer Restkupferkonzentration nach dem Druckaustausch von ca. 0,5 bis 1,0 g/l beträgt die Endsilberkonzentration ca. 5 bis 10 mg/l. Die Beispiele der Tabelle 4 verdeutlichen das Verhalten des Silbers während des Austauschs.

Überraschenderweise tritt bei dem erfindungsgemäßen Verfahren praktisch keine Säurebildung auf. Dies steht im Gegensatz zu den bisherigen Erkenntnissen z. B. in reinen sulphatischen Lösungen. Bei dem erfindungsgemäßen Verfahren ist es egal, ob von einer vollständig oxidierten Kupfer(II)-chloridhaltigen Lösung oder von einer vollständig reduzierten Kupfer(I)-chloridhaltigen Lösung ausgegangen wird.

Nebenreaktionen, welche die Reaktion von vorhandenem Schwefel mit Wasser beinhalten und unter Freisetzung von Wasserstoffionen zu Säurebildung führen, spielen nur eine sehr untergeordnete Rolle. Es wurde gefunden, daß die Reaktionsgeschwindigkeit dieser säurebildenden Nebenreaktion temperaturabhängig ist. Es ist erfindungsgemäß auch möglich, im Temperaturgebiet oberhalb von 200 C zu arbeiten, dann muß jedoch die kupferhaltige chloridische Lösung das Kupfer im reduzierten Zustand, d. h. als Kupfer(I), enthalten.

Das erfindungsgemäße Verfahren wird vorzugsweise bei einer Temperatur oberhalb 180 C durchgeführt, da unterhalb dieser Temperatur die Entfernung der NE-Metalle aus herkömmlichen Flotationskonzentraten nicht vollständig ist. Auch das im Chalkopyrit ($CuFeS_2$) gebundene Eisen wird unterhalb 180 C kaum ausgebracht, weil dieses Mineral bei diesen Bedingungen in einer kupferhaltigen Lösung nur langsam reagiert. Im Temperaturbereich von 140 bis 180 C ist es mit dem erfindungsgemäßen Verfahren allerdings möglich, eine kupferhaltige Lösung unter Einsatz eines hohen Konzentratüberschusses zu entkupfern, wie aus den Beispielen der Tabelle 2b zu ersehen ist. Die Tabelle 2a zeigt dagegen, daß unterhalb 140 C die Reaktionsgeschwindigkeit des Austausches so niedrig ist, daß auch keine vollständige Entkupferung der Lösung mehr stattfindet. Die Tabelle 2b zeigt weiterhin, daß die Reaktionsgeschwindigkeit mit steigender Temperatur zunimmt.

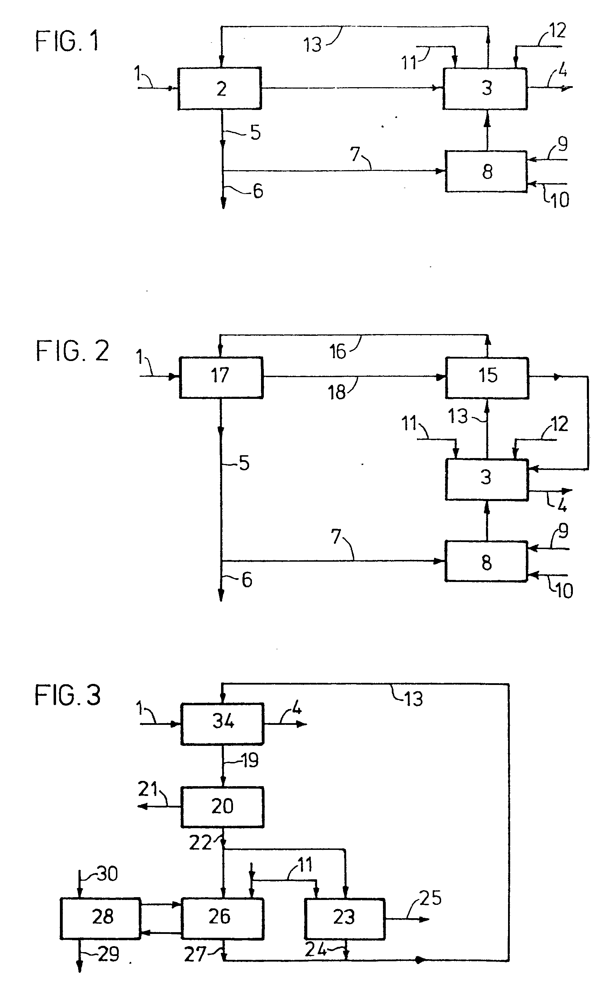

Das erfindungsgemäße Verfahren soll nun anhand der Verfahrensschemata, Fig. 1 bis 6, näher erläutert werden. In diesen Figuren haben die Zahlen folgende Bedeutung:

Figur 1

1 Komplex-Konzentrat: $CuFeS_2$, $(Zn, Fe) S$, $PbS$, Gangart, Edelmetalle

2 Druckaustauschstufe
$CuFeS_2 + CuCl_2 \rightarrow 2\ CuS\downarrow + FeCl_2$
$(Zn, Fe)\ S + CuCl_2 \rightarrow CuS\downarrow + (Zn, Fe)\ Cl_2$
$PbS + CuCl_2 \rightarrow CuS\downarrow + PbCl_2$

3 Regeneration der Kupferlösung
$CuS + \frac{1}{2}O_2 + 2\ HCl \rightarrow CuCl_2 + S°\downarrow + H_2O$

4 Kupferkonzentrat: $CuS$, $FeS_2$, $S°$, Edelmetalle, Gangart

5 $ZnCl_2$, $FeCl_2$, $PbCl_2$, NaCl-Lösung

6 Abstoß zur NE-Metall-Trennung und Gewinnung
$ZnCl_2$, $FeCl_2$, $PbCl_2$, NaCl-Lösung

6

7 Rückfuhr zur Herstellung der Kupferlösung

8 NaCl-Anrührung

9 NaCl

10 $H_2O$

11 $O_2$

12 HCl

13 $CuCl_2$-Lösung

14 CuS-Konzentrat

Figur 2

1 Komplex-Konzentrat: $CuFeS_2$, (Zn, Fe) S, PbS, $FeS_2$. Gangart, Edelmetalle

3 Regeneration der Kupferlösung
$CuS + \frac{1}{2}O_2 + 2\ HCl \rightarrow CuCl_2 + S°\downarrow + H_2O$

4 Kupferkonzentrat: CuS, $FeS_2$, S°, Edelmetalle, Gangart

5 $ZnCl_2$, $FeCl_2$, $PbCl_2$, NaCl-Lösung

6 Abstoß zur NE-Metall-Trennung und -Gewinnung
$ZnCl_2$, $FeCl_2$, $PbCl_2$, NaCl-Lösung

7 Rückfuhr zur Herstellung der Kupferlösung

8 NaCl-Anrührung

9 NaCl

10 $H_2O$

11 $O_2$

12 HCl

13 $CuCl_2$-Lösung

15 Reduktionsstufe: $CuCl_2 + Cu_2S \rightarrow CuS\downarrow + 2\ CuCl$

16 CuCl-Lösung

17 Druckaustauschstufe
$CuFeS_2 + 2\ CuCl \rightarrow Cu_2S\downarrow + CuS\downarrow + FeCl_2$
$(Zn, Fe)\ S + 2\ CuCl \rightarrow Cu_2S\downarrow + (Zn, Fe)\ Cl_2$
$PbS + 2\ CuCl \rightarrow Cu_2S\downarrow + PbCl_2$
$Cu_2S$-Konzentrat

Figur 3

1 Komplex-Konzentrat $CuFeS_2$, (Zn, Fe) S, PbS, $FeS_2$, Gangart, Edelmetalle

4 Kupferkonzentrat, CuS, $FeS_2$, S°, Gangart, Edelmetalle

11 $O_2$-haltiges Gas

13 $CuCl_2$-Lösung

7

19 $ZnCl_2$, $FeCl_2$, $PbCl_2$, NaCl-Lösung, CuCl-Überschuß

20 Kühlung und $PbCl_2$-Kristallisation

21 $PbCl_2$-Kristallisationsprodukt zur Aufarbeitung

22 $ZnCl_2$, $FeCl_2$, NaCl-Lösung, Rest $PbCl_2$, CuCl-Überschuß

23 Eisenfällung $FeCl_2 + \frac{3}{4} O_2 + 2\ CuCl + \frac{1}{2} H_2O \rightarrow FeOOH\downarrow + 2\ CuCl_2$

24 $CuCl_2$-Lösung mit $ZnCl_2$, Rest $PbCl_2$

25 Eisenfällprodukt

26 Zinkextraktion mit Kationenaustauscher $ZnCl_2 + 2\ HR + CuCl + \frac{1}{2} O_2 \rightarrow ZnR + 2\ CuCl_2 + H_2O$

27 $CuCl_2$-Lösung mit $FeCl_2$, Rest $PbCl_2$

28 Zinkelution $ZnR_2 + H_2SO_4 \rightarrow ZnSO_4 + 2\ HR$

29 Zinksulfat-Eluat

30 wäßrige $H_2SO_4$-Lösung

34 Druckaustauschstufe
· $CuFeS_2 + CuCl_2 \rightarrow CuS\downarrow + FeCl_2$
$(Zn, Fe)\ S + CuCl_2 \rightarrow CuS\downarrow + (Zn, Fe)\ Cl_2$
$PbS + CuCl_2 \rightarrow CuS\downarrow + PbCl_2$
$CuS + CuCl_2 \rightarrow 2\ CuCl + S°\downarrow$

Figur 4

1 Komplex-Konzentrate: $CuFeS_2$, $(Zn, Fe)\ S$, PbS, $FeS_2$, Gangart, Edelmetalle

4 Kupferkonzentrate: CuS, $FeS_2$, S°, Edelmetalle, Gangart

11 $O_2$-haltiges Gas

14 CuS-Konzentrat

15 Reduktionsstufe $Cu_2S + CuCl_2 \rightarrow 2\ CuCl + CuS\downarrow$

16 CuCl-Lösung

17 Druckaustauschstufe
$CuFeS_2 + 2\ CuCl \rightarrow Cu_2S\downarrow + CuS\downarrow + FeCl_2$
$(Zn, Fe)\ S + 2\ CuCl \rightarrow Cu_2S\downarrow + (Zn, Fe)\ Cl_2$
$PbS + 2\ CuCl \rightarrow Cu_2S\downarrow + PbCl_2$

18 $Cu_2S$-Konzentrat

19 $ZnCl_2$, $FeCl_2$, $PbCl_2$, NaCl-Lösung, CuCl-Überschuß

20 Kühlung und $PbCl_2$-Kristallisation

21 $PbCl_2$-Kristallisationsprodukt zur Aufarbeitung

22 $ZnCl_2$, $FeCl_2$, NaCl, Rest $PbCl_2$, CuCl-Überschuß

23 Eisenfällung $FeCl_2 + \frac{3}{4} O_2 + 2\ CuCl + \frac{1}{2} H_2O \rightarrow FeOOH\downarrow + 2\ CuCl_2$

24 $CuCl_2$-Lösung mit $ZnCl_2$, Rest $PbCl_2$

25 Eisenfällprodukt

26 Zinkextraktion mit Kationenaustauscher
$ZnCl_2 + 2\,HR + 2\,CuCl + \frac{1}{2}\,O_2 \rightarrow ZnR_2 + 2\,CuCl_2 + H_2O$

27 $CuCl_2$-Lösung mit $FeCl_2$, Rest $PbCl_2$

28 Zinkelution $ZnR_2 + H_2SO_4 \rightarrow ZnSO_4 + 2\,HR$

29 Zinksulfat-Eluat

30 wäßrige $H_2SO_4$-Lösung

31 $CuCl_2$-CuCl-Lösung

32 $CuCl_2$-Lösung mit Rest $FeCl_2$, $ZnCl_2$, $PbCl_2$

33 Oxidationsstufe $CuCl_2 + CuS \rightarrow 2\,CuCl + S^\circ\downarrow$

## Figur 5

1 Komplexkonzentrat: $CuFeS_2$, (Zn, Fe) S, PbS, $FeS_2$, Gangart, Edelmetalle

4 Kupferkonzentrat: CuS, $FeS_2$, $S^\circ$, Gangart, Edelmetalle

5 $ZnCl_2$, $FeCl_2$, $PbCl_2$, NaCl-Lösung

10 $H_2O$

11 $O_2$

14 CuS-Konzentrat

15 Reduktionsstufe: $Cu_2S + CuCl_2 \rightarrow 2\,CuCl + CuS\downarrow$

17 Druckaustauschstufe
$CuFeS_2 + 2\,CuCl \rightarrow Cu_2S\downarrow + FeCl_2$
(Zn, Fe) S + 2 CuCl $\rightarrow Cu_2S\downarrow +$ (Zn, Fe) $Cl_2$
$PbS + 2\,CuCl \rightarrow Cu_2S\downarrow + PbCl_2$

18 $Cu_2S$-Konzentrat

20 Kühlung und $PbCl_2$-Kristallisation

21 $PbCl_2$-Kristallisationsprodukt zur Aufarbeitung

35 CuCl-$FeCl_2$-Lösung

36 $FeCl_2$-, $CuCl_2$-Lösung

37 Oxidationsstufe $2\,FeCl_3 + CuS \rightarrow 2\,FeCl_2 + CuCl_2 + S^\circ\downarrow$

38 Zinkextraktion mit Anionaustauscher $2\,RCl + ZnCl_2 \rightarrow R_2 (ZnCl_4)$

39 HCl-Raffinat

40 $FeCl_3$-Lösung

41 Fe-Fällung und Fe(III)-chlorid-Regeneration $3\,FeCl_2 + \frac{3}{2}\,O_2 + \frac{1}{2}\,H_2O \rightarrow FeOOH\downarrow + 2\,FeCl_3$

42 Elution $R_2ZnCl_4 \rightarrow 2\,RCl + ZnCl_4$

43 $ZnCl_2$-Eluat

44 Zinkextration $2\,R'H + ZnCl_2 \rightarrow R'_2Zn + 2\,HCl$

9

45 Elution $R'_2Zn + H_2SO_4 \rightarrow 2\ R'H + ZnSO_4$

46 $H_2SO_4$ aus Zinkgewinnungselektrolyse

47 $ZnSO_4$-Lösung zur Zinkgewinnungselektrolyse

Figur 6

1 Komplexkonzentration: $CuFeS_2$, (Zn, Fe) S, PbS, $FeS_2$, Gangart, Edelmetalle

4 Kupferkonzentrat CuS, $S°$, $FeS_2$, Edelmetalle, Gangart

9 NaCl, NaCl-Ausgleich

10 $H_2O$

11 $O_2$

13 $CuCl_2$-Lösung

30 $H_2SO_4$

48 Druckaustauschstufe
$CuFeS_2 + CuCl_2 \rightarrow 2\ CuS\downarrow + FeCl_2$
(Zn, Fe) S + $CuCl_2 \rightarrow CuS\downarrow$ + (Zn, Fe) $Cl_2$
$PbS + CuCl_2 \rightarrow CuS\downarrow + PbCl_2$
$PbCl_2 + Na_2SO_4 \rightarrow PbSO_4\downarrow + 2\ NaCl$

49 Regeneration der Kupferlösung
$CuS + \frac{1}{2}O_2 + 2\ NaCl + H_2SO_4 \rightarrow CuCl_2 + Na_2SO_4 + S°\downarrow + H_2O$

50 NaCl-Laugung unter reduzierenden Bedingungen
$PbSO_4 + 2\ NaCl \rightarrow PbCl_2 + Na_2SO_4$

51 CuS-Konzentrat mit $PbSO_4$ und $S°$

52 Pb-haltige NaCl-Lösung

53 $Na_2CO_3$

54 $PbCO_3$-Fällung: $PbCl_2 + Na_2CO_3 \rightarrow 2\ NaCl + PbCO_3\downarrow$

55 $PbCO_3$

56 Abstoß NaCl-Lösung

57 $ZnCl_2$, $FeCl_2$, NaCl-Lösung
Abstoß zur NE-Metalltrennung und -Gewinnung
$ZnCl_2$, $FeCl_2$, NaCl, $Na_2SO_4$-Lösung

58 Rückführ zur Herstellung der $CuCl_2$-Lösung

59 $ZnCl_2$, $FeCl_2$, NaCl, $Na_2SO_4$-Lösung

60 CuS-Konzentrat mit $PbSO_4$

Die Verfahrensschemata für die Durchführung des Druckaustauschverfahrens beinhalten die Herstellung einer kupferhaltigen, vorwiegend chloridischen Lösung und die Aufarbeitung der anfallenden eisenhaltigen und NE-metallhaltigen chloridischen Lösung zur Entfernung des Eisens und Trennung und Gewinnung der NE-Metalle Zn, Pb, Ni und Co, soweit sie vorhanden sind. Kupferhaltige, vorwiegend chloridische Lösungen fallen bei verschiedenen Aufschlußverfahren an, wie z. B. bei der oxidierenden Laugung von Kupferkonzentraten oder kupferhaltigen Komplexkonzentraten mittels Eisen(III)-chlorid oder Kupfer(II)-chlorid. Eine sulfathaltige vorwiegend chloridische Lösung fällt bei der Verarbeitung von Pyritabbränden mittels chlorierender Röstung oder chlorierender Verflüchtigung an. Auch bei der Aufarbeitung von »Recycling«-Materialien fallen oft kupfer- und sulfathaltige, vorwiegend chloridische Lösungen an.

Die kupferhaltigen, vorwiegend chloridischen Lösungen, hergestellt nach den vorgenannten Beispielen, sind alle zur Durchführung des erfindungsgemäßen Verfahrens geeignet. Das erfindungsgemäße Verfahren bietet den zusätzlichen Vorteil, daß aus dem beim Druckaustauschverfahren hergestellten Kupferkonzentrat leicht eine kupferhaltige, vorwiegend chloridische Lösung hergestellt werden kann. Dies bedeutet, daß sich bei Anwendung des erfindungsgemäßen Verfahrens eine getrennte aufwendige Aufschlußstufe erübrigt.

### Figur 1

Das in Figur 1 dargestellte Verfahren umfaßt folgende Stufen:

1. Druckaustauschstufe mit einer $Cu^{2+}$-haltigen Lösung. Die Temperatur ist vorzugsweise 200 C. Herstellung eines CuS-Konzentrats.
2. Abstoßung eines Teils der auf 1 g/l Cu entkupferten, aus dem Druckaustausch stammenden Lösung zur NE-Metall-Trennung und -Gewinnung und zur Eisenentfernung.
3. Rückführung des übrigen Teils der auf 1 g/l Cu entkupferten, aus dem Druckaustausch stammenden Lösung zur Herstellung der kupferhaltigen chloridischen Lösung. Zugabe von Kochsalz und Wasser zum Ausgleich der Abstoß-Verluste.
4. Herstellung der Kupfer(II)-haltigen, vorwiegend chloridischen Lösung durch teilweise Oxidation mit einem sauerstoffhaltigen Gas des beim Druckaustausch gebildeten Kupfer(II)-sulfidkonzentrats.

Weil beim Oxidationsvorgang Säure verbraucht wird, ist eine Säurezugabe z. B. als HCl oder als $H_2SO_4$ und NaCl erforderlich.

Aus der Suspension wird durch Fest-Flüssig-Trennung das Kupferkonzentrat sowie die für den Druckaustausch benötigte $CuCl_2$-Lösung gewonnen.

### Figur 2

Das in Fig. 2 dargestellte Verfahren umfaßt im wesentlichen die gleichen Stufen wie das Verfahren der Figur 1, mit dem Unterschied, daß die Druckaustauschstufe mit einer $Cu^+$-haltigen Lösung erfolgt. Die Herstellung einer CuCl-Lösung ist somit erforderlich.

Die Stufen sind:

1. Druckaustauschstufe mit einer $Cu^+$-haltigen Lösung. Die Temperatur ist vorzugsweise 250 C. Herstellung eines $Cu_2S$-Konzentrats.
2. Abstoß eines Teils der auf 1 g/l Cu entkupferten, aus dem Druckaustausch stammenden Lösung zur NE-Metall-Trennung und -Gewinnung und zur Eisenentfernung.
3. Rückführung des übrigen Teils der auf 1 g/l Cu entkupferten, aus dem Druckaustausch stammenden Lösung zur Herstellung der kupferhaltigen chloridischen Lösung. Zugabe von Kochsalz und Wasser zum Ausgleich der Abstoß-Verluste.
4. Herstellung der Kupfer(II)-haltigen, vorwiegend chloridischen Lösung durch teilweise Oxidation mit einem sauerstoffhaltigen Gas des aus der vorgeschalteten Reduktionsstufe stammenden Kupfer(II)-sulfidkonzentrates.
   Weil beim Oxidationsvorgang Säure verbraucht wird, ist eine Säurezugabe, z. B. als HCl oder als $H_2SO_4$ und NaCl erforderlich. Aus der Suspension wird durch Fest-Flüssig-Trennung das Kupferkonzentrat sowie die zu reduzierende $CuCl_2$-Lösung gewonnen.
5. Die $CuCl_2$-Lösung wird mit aus dem Druckaustausch stammenden Kupfer(I)-sulfidkonzentrat in eine für den Druckaustausch geeignete CuCl-Lösung umgewandelt.

Die Verfahrensschemata der Fig. 3, 4 und 5 beruhen auf dem erheblichen Vorteil des erfindungsgemäßen Verfahrens, nämlich dem Ausbleiben der Säurebildung während der Austauschstufe. Das Druckaustauschverfahren kann deshalb in einem geschlossenen Kreislauf durchgeführt werden. Dies setzt eine zusätzliche NE-Metallentfernung voraus, die nach bekannten Verfahren durchgeführt werden kann.

### Figur 3

1. Druckaustauschstufe mit einer $Cu^{2+}$-haltigen Lösung. Die Temperatur ist vorzugsweise 200 C. Das Konzentrat- zu Kupferverhältnis wird sehr niedrig gewählt, so daß nach dem Druckaustausch eine Lösung anfällt, die noch genügend einwertiges Kupfer enthält, um die Eisen- und Zinkentfernung zu ermöglichen. Das gebildete Kupfer(II)-sulfidkonzentrat wird abgetrennt.

2. Teilweise Bleientfernung durch Kühlung der beim Druckaustausch anfallenden Lösung und Abtrennung des auskristallisierten $PbCl_2$.

3. Extraktion des Zinks aus einem ersten Teil der $ZnCl_2$-, $FeCl_2$-, NaCl , CuCl haltigen Lösung mit einem Kationenaustauscher unter gleichzeitiger Oxidation des CuCl zu $CuCl_2$ mit einem sauerstoffhaltigen Gas.

4. Fällung des Eisens als Eisenoxid oder Eisenhydroxid unter gleichzeitiger Oxidation des CuCl zu $CuCl_2$.

5. Rückführung der Kupfer(II)-chloridlösung zur Druckaustauschstufe.

## Figur 4

1. Druckaustauschstufe mit einer $Cu^+$-haltigen Lösung. Die Temperatur ist vorzugsweise 250 C. Das Konzentrat- zu Kupferverhältnis wird sehr niedrig gewählt, so daß nach dem Druckaustausch eine Lösung anfällt, die noch genügend einwertiges Kupfer enthält, um die Eisen- und Zinkentfernung zu ermöglichen. Das gebildete Kupfer(I)-sulfid wird abgetrennt.

2. Teilweise Bleientfernung durch Kühlung der beim Druckaustausch anfallenden Lösung und Abtrennung des auskristallisierten $PbCl_2$.

3. Extraktion des Zinks wie beim Verfahrensschema der Fig. 3.

4. Fällung des Eisens wie beim Verfahrensschema der Fig. 3.

5. Anreicherung der kupferhaltigen Lösung durch teilweise Oxidation des aus der Reduktionsstufe stammenden CuS-Konzentrats. Abtrennung des Endkupferkonzentrates.

6. Herstellung der CuCl-Lösung durch Reduktion der aus Stufe 5. stammenden Lösung mit aus dem Druckaustausch stammenden Kupfer(I)-sulfidkonzentrat.
Rückführung der CuCl-Lösung zum Druckaustausch.

## Figur 5

1 Druckaustauschstufe mit einer $Cu^+$-haltigen Lösung. Die Temperatur ist vorzugsweise 250 C. Die Kupferkonzentration der Lösung nach dem Austausch beträgt etwa 1 g/l.

2. Teilweise Bleientfernung durch Kühlung der beim Druckaustausch anfallenden Lösung und Abtrennung des auskristallisierten $PbCl_2$.

3. Zinkextraktion als $ZnCl_2$ mit einem Anionenaustauscher. Nachgeschaltete Umwandlung des extrahierten $ZnCl_2$ zu $ZnSO_4$ mit einem Kationenaustauscher und HCl-Rückgewinnung.

4. Eisenfällung und Eisen(III)-chlorid-Regeneration durch Oxidation der $FeCl_2$-Lösung mit Sauerstoff.

5. Laugung des aus der Reduktionsstufe stammenden Kupfer(II)-sulfidkonzentrats mit regeneriertem Eisen(III)-chlorid zur Herstellung der erforderlichen Kupferlösung.

6. Reduktion der in Stufe 5. anfallenden $CuCl_2$-Lösung mit aus dem Druckaustausch stammenden Kupfer(I)-sulfidkonzentrat.
Rückführung der anfallenden CuCl-haltigen Lösung zum Druckaustausch.

## Figur 6

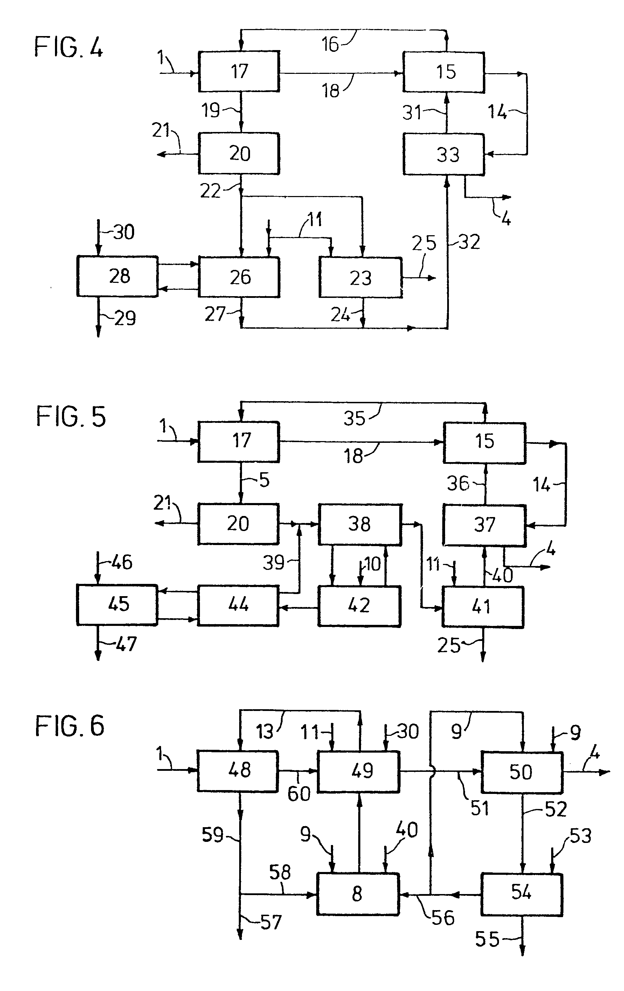

Das in Fig. 6 dargestellte Verfahrensschema entspricht dem der Fig. 1.

Es unterscheidet sich nur dadurch davon, daß aufgrund der hohen Sulfatkonzentration in der vorwiegend chloridischen Lösung das im Komplexkonzentrat vorhandene Blei als $PbSO_4$ mit dem Kupferkonzentrat ausgebracht wird. Somit ist die in Fig. 6 dargestellte Kochsalzlaugung erforderlich.

Die folgenden Verfahrensbeispiele sollen das erfindungsgemäße Verfahren noch näher erläutern.

Die Rührgeschwindigkeit der Autoklaven betrug 1000 UpM.

Die Reaktionstemperatur der Suspension wurde durch Widerstandsheizung der Außenwand des Autoklaven erreicht. Um den Einfluß der Verweilzeit und der Temperatur genau ermitteln zu können, wurde die Aufheizzeit so kurz wie möglich gehalten.

Die Reaktionstemperatur entsprach den respektiven Versuchsbedingungen, der Druck im Autoklaven entsprach dem Wasserdampfdruck bei der vorherrschenden Temperatur.

Nach Durchführung des jeweiligen Versuchs wurde die ausreagierte Suspension mittels einer wasserbeschickten Kühlschlange schnell abgekühlt und filtriert. Der Filterkuchen wurde nach Waschen vakuumgetrocknet.

Die Versuchsbedingungen und Versuchsergebnisse der einzelnen Versuchsgruppen sind in den folgenden Tabellen 1 bis 7 aufgeführt.

Tabelle 1

Druckaustausch im vorwiegend chloridischen System

Komplex-Cu-Zn-Pb-Konzentrat

Chemische Zusammensetzung  | Mineralogische Zusammensetzung nach Röntgenfeinstrukturanalyse

|   | Cu | Zn | Pb | Fe | S | Cp | Sph | Py | Ga |
|---|------|------|-----|------|------|---|-----|----|----|
| % | 16,4 | 10,0 | 6,3 | 25,3 | 35,2 | 4 | 4 | 3 | 2 |

Zusammensetzung der vorwiegend chloridischen Lösung: 95 g/l $Cl^-$, 145 g/l $SO_4^{2-}$, 15—25 g/l Cu, 39,5 g/l Zn, 1,5 g/l Fe, Kationen-Ausgleich $Na^+$

| Versuchs-Nr. | Bedingungen Temp. (°C) | Verweilzeit (h) | Kupferhaltige Lösung Cu-Zn-Konz.-Einsatz (g/l) | $Cu_{ges}$ (g/l) | $Cu^{2+}$ (g/l) | $Cu^{1+}$ (g/l) | $H_2SO_4$ (g/l) | Verhältnis Konz. g/l zu Cu g/l | Entkupferte Lösung Cu (g/l) | $H_2SO_4$ (g/l) |
|---|---|---|---|---|---|---|---|---|---|---|
| A. Vorwiegend chloridische Lösung | | | | | | | | | | |
| 1 | 200 | 1 | 75 | 18,1 | 18,1 | 0 | 14,2 | 4,14 | 0,92 | 24,9 |
| 2 | 250 | 1 | 45 | 15,2 | 15,2 | 0 | 16,2 | 2,96 | 0,04 | 27,2 |
| 3 | 200 | 1 | 43,3 | 19,0 | 0 | 19,0 | 14,4 | 2,28 | 1,62 | 14,9 |
| 4 | 200 | 3 | 48,5 | 18,1 | 0 | 18,1 | 13,3 | 2,68 | 0,43 | 14,3 |
| 5 | 250 | 1 | 30 | 21,3 | 0 | 21,3 | 14,9 | 1,41 | 1,24 | 17,6 |

0 009 635

Tabelle 1 (Fortsetzung)

| Versuchs-Nr. | Kupferkonzentrat | | | | Ent-kupferung | Ausbringen | | Säurebildung $H_2SO_4(g)$ Konz. (g) | Röntgenfeinstrukturanalyse | | | |
|---|---|---|---|---|---|---|---|---|---|---|---|---|
| | Konzen-tration | Zusammensetzung | | | | Zn | Fe | | Cov | Di | Py | An |
| | | Cu | Zn | Fe | | | | | | | | |
| | (g/l) | (%) | (%) | (%) | (%) | (%) | (%) | | | | | |
| A. Vorwiegend chloridische Lösung | | | | | | | | | | | | |
| 1 | 78,9 | 37,0 | 1,43 | 12,2 | 94,9 | 85,3 | 49,5 | 0,14 | 4 | 2 | 3 | 2 |
| 2 | 52,2 | 46,3 | 0,44 | 9,05 | 99,5 | 95,0 | 58,8 | 0,24 | 3 | 3 | 3 | 2 |
| 3 | 64,5 | 38,4 | 2,44 | 11,7 | 91,5 | 64,0 | 31,8 | 0 | 2 | 4 | 3 | 2 |
| 4 | 68,4 | 39,5 | 1,61 | 11,0 | 97,6 | 77,3 | 39,8 | 0,02 | 2 | 4 | 3 | 2 |
| 5 | 46,9 | 52,4 | 0,47 | 9,6 | 94,2 | 92,7 | 40,7 | 0,09 | 0 | 4 | 2 | 2 |

0 = nicht vorhanden     Cov = Covellin   = CuS

2 = wenig               Cp  = Chalkopyrit = $CuFeS_2$

3 = mittel              Di  = Digenit    = $Cu_2S$

4 = viel                Sph = Sphalerit  = ZnS

                        Py  = Pyrit      = $FeS_2$

                        Ga  = Galenit    = PbS

                        An  = Anglesit   = $PbSO_4$

Tabelle 2

Abhängigkeit des Druckaustausches von der Temperatur

3a) Temperaturbereich < 140°C

Einsatz:
1) Cu-Zn-Pb-Konzentrat

|  | Cu | Zn | Fe | Pb | S |
|---|---|---|---|---|---|
| % | 11,3 | 12,0 | 25,1 | 4,6 | 33,3 |

2) vorwiegend chloridische Lösung

|  | $Cu^{2+}$ | Fe | Zn | $Cl^-$ | $SO_4^{2-}$ | $Na^+$ |
|---|---|---|---|---|---|---|
| g/l | 15,3 | 1,5 | 39,5 | 95 | 145 | Kationen-Ausgleich |

3b) Temperaturbereich > 140°C

Einsatz:
1) Cu-Zn-Pb-Konzentrat

|  | Cu | Zn | Fe | Pb | S |
|---|---|---|---|---|---|
| % | 16,4 | 10,0 | 25,3 | 6,3 | 35,2 |

2) vorwiegend chloridische Lösung

|  | $Cu^{2+}$ | Fe | Zn | $Cl^-$ | $SO_4^{2-}$ | $Na^+$ |
|---|---|---|---|---|---|---|
| g/l | 15–25 | 1,5 | 39,5 | 95 | 145 | Kationen-Ausgleich |

| Versuchs-Nr. | Bedingungen | | | | Endlauge Cu | Kupferkonzentrat | | | | Cu-Aus-fällung | Zn-Aus-bringen | Fe-Aus-bringen |
|---|---|---|---|---|---|---|---|---|---|---|---|---|
|  | Temp. | Verweil-zeit | Konzen-trat | g Konzentrat / g Cu in Lsg. |  | Menge | Cu | Zn | Fe |  |  |  |
|  | °C | h | g/l |  | g/l | g/l | % | % | % | % | % | % |
| 3a) Temperaturbereich < 140°C | | | | | | | | | | | | |
| 8 | 90 | 3 | 317 | 20,7 | 10,4 | 315 | 12,9 | 11,5 | 23,0 | 32,0 | 4,8 | 8,9 |
| 9 | 120 | 3 | 317 | 20,7 | 4,2 | 319,6 | 14,5 | 10,7 | 22,0 | 72,5 | 10,8 | 11,6 |
| 10 | 140 | 3 | 317 | 20,7 | 0,022 | 313,5 | 16,4 | 10,0 | 20,2 | 99,9 | 17,6 | 20,4 |

0 009 635

Fortsetzung

0 009 635

| Versuchs-Nr. | Bedingungen | | | | Endlauge Cu | Kupferkonzentrat | | | | Cu-Aus-fällung | Zn-Aus-bringen | Fe-Aus-bringen |
|---|---|---|---|---|---|---|---|---|---|---|---|---|
| | Temp. | Verweil-zeit | Konzen-trat | $\dfrac{\text{g Konzentrat}}{\text{g Cu in Lsg.}}$ | | Menge | Cu | Zn | Fe | | | |
| | °C | h | g/l | | g/l | g/l | % | % | % | % | % | % |
| 3b) Temperaturbereich >140°C | | | | | | | | | | | | |
| 11 | 140 | 1 | 317 | 20,7 | 0,01 | 316 | 21,2 | 6,9 | 21,7 | 99,9 | 31,2 | 14,5 |
| 12 | 150 | 3 | 350 | 14,0 | 0,83 | 347,5 | 23,5 | 6,4 | 6,8 | 96,7 | 36,5 | 73,3 |
| 13 | 180 | 1 | 69,5 | 4,54 | 2,1 | 78,8 | 33,2 | 2,31 | 16,2 | 86,3 | 73,8 | 27,4 |
| 14 | 200 | 1 | 75,0 | 4,14 | 0,92 | 78,9 | 37,0 | 1,43 | 12,2 | 94,9 | 85,0 | 49,3 |
| 15 | 220 | 1 | 69,5 | 4,54 | 0,16 | 71,6 | 39,1 | 1,22 | 12,4 | 99,0 | 87,4 | 49,5 |
| 16 | 250 | 1 | 45 | 2,90 | 0,04 | 52,2 | 46,3 | 0,44 | 9,05 | 99,7 | 94,9 | 58,5 |

Tabelle 3

Abhängigkeit des Druckaustausches von der Verweilzeit bei 200 und 250°C

Einsatz:
Cu-Zn-Pb-Konzentrat

|  | Cu | Zn | Fe | Pb | S |  |
|---|---|---|---|---|---|---|
| % | 16,4 | 10,0 | 25,3 | 6,3 | 35,2 |  |

vorwiegend chloridische Lösung

|  | $Cu^{2+}$ | Fe | Zn | $Cl^-$ | $SO_4^{2-}$ | $Na^+$ |
|---|---|---|---|---|---|---|
| g/l | 15—25 | 1,5 | 39,5 | 95 | 145 | Kationen-Ausgleich |

| Versuchs-Nr. | Bedingungen | | | Verhältnis | Einsatz-lauge Cu | End-lauge Cu | Kupferkonzentrat | | | | Cu-Aus-fällung | Ausbringen | |
|---|---|---|---|---|---|---|---|---|---|---|---|---|---|
|  | Temp. | Verweil-zeit | Konzen-trat | $\dfrac{\text{g Konzentrat}}{\text{g Cu in Lsg.}}$ |  |  | Austrag | Cu | Zn | Fe |  | Zn | Fe |
|  | °C | h | g/l |  | g/l | g/l | g/l | % | % | % | % | % | % |
| 18 | 250 | 1 | 45 | 2,96 | 15,2 | 0,04 | 52,2 | 46,3 | 0,44 | 9,05 | 99,5 | 95 | 58,8 |
| 19 | 250 | 0,5 | 30 | 1,97 | 15,2 | 2,60 | 41,9 | 44,7 | 0,36 | 9,80 | 82,9 | 95 | 45,9 |
| 20 | 250 | 0,25 | 50 | 3,29 | 15,2 | 0,22 | 56,9 | 43,1 | 0,93 | 9,70 | 98,6 | 89,4 | 56,4 |
| 21 | 200 | 3 | 65 | 4,25 | 15,3 | 0,19 | 68,0 | 40,4 | 0,89 | 10,8 | 98,8 | 90,7 | 55,3 |
| 22 | 200 | 2 | 65 | 4,25 | 15,3 | 0,28 | 66,1 | 40,8 | 0,78 | 10,8 | 98,2 | 92,1 | 56,6 |
| 23 | 200 | 1 | 75 | 4,14 | 18,1 | 0,92 | 78,9 | 37,0 | 1,43 | 12,2 | 94,9 | 85,3 | 49,5 |
| 24 | 200 | 0,5 | 80 | 4,0 | 20,0 | 1,36 | 87,5 | 36,3 | 1,63 | 12,9 | 93,4 | 79,7 | 44,2 |

0 009 635

## Tabelle 4

Abhängigkeit des Druckaustausches von der Konzentratmenge

Einsatz:
Cu-Zn-Pb-Konzentrat

|      | Cu   | Zn   | Fe   | Pb  | S    |
|------|------|------|------|-----|------|
| %    | 16,4 | 10,0 | 25,3 | 6,3 | 35,2 |

vorwiegend chloridische Lösung

|      | Cu    | Fe  | Zn   | $Cl^-$ | $SO_4^{2-}$ | $Na^+$            |
|------|-------|-----|------|--------|-------------|-------------------|
| g/l  | 18–28 | 1,5 | 39,5 | 95     | 145         | Kationen-Ausgleich |

| Vers. Nr. | Bedingungen | | | Verhältnis $\dfrac{\text{g Konzentrat}}{\text{g Cu in Lsg.}}$ | Einsatzlauge | | Endlauge | | Kupferkonzentrat | | | | Cu-Ausfäl-lung | Ag-Ausfäl-lung | Ausbringen | |
|---|---|---|---|---|---|---|---|---|---|---|---|---|---|---|---|---|
| | Temp. | Ver-weilzeit | Kon-zentrat | | Cu | Ag | Cu | Ag | Aus-trag | Cu | Zn | Fe | | | Zn | Fe |
| | °C | h | g/l | | g/l | mg/l | g/l | mg/l | g/l | % | % | % | % | % | % | % |
| 25 | 200 | 3 | 44,6  | 1,72 | 25,9 | 39 | 8,8    | 44    | 48,9  | 42,1 | 0,20 | 10,1 | 66,0  | 0     | 97,8 | 56,1 |
| 26 | 200 | 3 | 50,0  | 2,72 | 18,4 | 44 | 2,37   | 44    | 57,4  | 42,0 | 0,24 | 10,4 | 87,1  | 0     | 97,2 | 52,6 |
| 27 | 200 | 3 | 60,0  | 3,26 | 18,4 | 44 | 0,82   | 10    | 62,3  | 44,5 | 0,32 | 11,1 | 95,5  | 77,3  | 96,7 | 54,3 |
| 28 | 200 | 3 | 70,0  | 3,80 | 18,4 | 44 | 0,089  | 3,7   | 68,3  | 44,2 | 0,68 | 11,1 | 99,5  | 91,6  | 93,4 | 57,0 |
| 29 | 200 | 3 | 100,0 | 5,43 | 18,4 | 44 | 0,0078 | 0,6   | 92,3  | 37,8 | 3,45 | 13,5 | >99,9 | 98,6  | 68,2 | 50,6 |
| 30 | 200 | 3 | 200,0 | 7,11 | 28,1 | 47 | 0,01   | <0,5  | 212,4 | 30,2 | 5,40 | 16,4 | >99,9 | >98,9 | 42,7 | 31,2 |

Tabelle 5

Die Reduktion von kupfer(II)-haltigen vorwiegend chloridischen Lösungen mit kupfer(I)-sulfidhaltigen Konzentraten

| Ver-suchs-Nr. | Temp. | Ver-weilzeit | Chlori-dische Lösung | $Cu^{2+}$ Konz. | Kupfer(I)-sulfidkonzentrat | | | End-lösung Cu | Endkonzentrat | | | | | Cu-Aus-bringen | Reduk-tionsgrad |
|---|---|---|---|---|---|---|---|---|---|---|---|---|---|---|
| | | | | | Gewicht | Cu | Stöchiome-trie bez. auf $Cu^{2+}$ in Lsg. | | Ge-wicht | Zusammensetzung | | | | |
| | | | | | | | | | | Cu | S | $SO_4$-S | | |
| | °C | h | Typ | g/l | g/l | % | (%) | g/l | g/l | % | % | % | % | % |
| 31 | 90 | 0,42 | A | 20,2 | 57,6 | 70,12 | 100 | 34,1 | 41,3 | 62,2 | 22,1 | — | 36,3 | 69 |
| 32 | 90 | 0,42 | A | 20,2 | 86,4 | 70,12 | 150 | 39,6 | 61,9 | 61,5 | 23,4 | 4,3 | 37,2 | 96 |
| 33 | 90 | 0,42 | A | 20,2 | 115,2 | 70,12 | 200 | 42,2 | 91,1 | 62,3 | 22,4 | 2,8 | 29,7 | 100 |
| 34 | 90 | 1 | B | 63,6 | 184,0 | 70,75 | 100 | 104,7 | 138,9 | 58,4 | 25,0 | 1,4 | 37,7 | 64,6 |

Zusammensetzung der vorwiegend chloridischen Lösung:

| Typ A | $Cu^{2+}$ | Zn | Fe | $Cl^-$ | $SO_4^{2-}$ | $Na^+$ |
|---|---|---|---|---|---|---|
| g/l | 20,2 | 39,5 | 1,5 | 95 | 145 | Kationen-Ausgleich |

| Typ B | $Cu^{2+}$ | $Fe^{2+}$ | $Cl^-$ |
|---|---|---|---|
| g/l | 63,6 | 112,5 | 214 |

Tabelle 6

Verhalten von im Komplexkonzentrat vorhandenem Blei während des Druckaustauschs und nachgeschalteter Kochsalzlaugung

1) Druckaustausch (Versuch 35)

Bedingungen:

| | |
|---|---|
| Temperatur | 200°C |
| Verweilzeit | 1 h |
| Konzentrat:Kupfer-Verhältnis | 4,14 g/g |

Einsatz:

| | Konzentration g/l | | Cu | Zn | Fe | Pb |
|---|---|---|---|---|---|---|
| Cu-Zn-Pb-Konzentrat | 75 | % | 16,4 | 10,0 | 25,3 | 6,3 |
| | | | $Cu^{2+}$ | $SO_4^{2-}$ | $Cl^-$ | |
| sulfathaltige, vorwiegend chloridische Lsg. | — | g/l | 18,1 | 145 | 95 | |

Austrag:

| | Konzentration g/l | | Cu | Zn | Fe | Pb |
|---|---|---|---|---|---|---|
| $PbSO_4$-haltiges Cu-Konzentrat | 81 | % | 38,4 | 1,43 | 11,3 | 5,9 |
| | | | $Cu^+$ | | | |
| entkupferte Lösung | — | g/l | 0,56 | | | |

Ausbringen:

| | Kupferfällung | Zinkausbringen | Eisenausbringen | Bleiausbringen |
|---|---|---|---|---|
| % | 96,9 | 84,6 | 51,8 | 0 |

2) Blei-Laugung des $PbSO_4$-haltigen Kupferkonzentrats in einer Kochsalzlösung (Versuch 36)

Bedingung:

| | |
|---|---|
| Temperatur | 80°C |
| Verweilzeit | 0,5 h |
| pH | 2,0 |
| NaCl-Konzentration | 250 g/l |
| Konzentration des PbSO$_4$-haltigen Cu-Konzentrats | 144,6 g/l |

Cu-Konzentrat:

Konzentration 130,4 g/l

| Zusammensetzung | Cu | Zn | Fe | Pb |
|---|---|---|---|---|
| % | 42,6 | 1,59 | 12,5 | 0,04 |

Pb-Ausbringen: 99 %

## Patentansprüche

1. Verfahren zur Herstellung von sulfidischen Kupferkonzentraten aus komplex zusammengesetzten sulfidischen Konzentraten, die neben Kupfer, Eisen und gegebenenfalls Edelmetallen mindestens eins der Nicht-Eisenmetalle Zink, Blei, Nickel und Kobalt als Hauptbestandteil enthalten, dadurch gekennzeichnet, daß die komplex zusammengesetzten sulfidischen Konzentrate einer kupferhaltigen, vorwiegend chloridischen Lösung zugemischt werden, und die so erhaltene Suspension bei erhöhter Temperatur unter erhöhtem Druck und bei einem pH-Wert unter 3 behandelt wird.

2. Verfahren nach Anspruch 1, dadurch gekennzeichnet, daß die kupferhaltige, vorwiegend chloridische Lösung edelmetallhaltig ist, und die Edelmetalle mit dem anfallenden Kupferkonzentrat ausgebracht werden.

3. Verfahren nach Anspruch 1 oder 2, dadurch gekennzeichnet, daß das Verhältnis des Gewichtes des zur kupferhaltigen, vorwiegend chloridischen Lösung zugesetzten, komplex zusammengesetzten Konzentrates zum Kupferinhalt der Lösung so eingestellt wird, daß die mittels Austauschreaktion zumindest teilweise entkupferte, vorwiegend chloridische Lösung bei 60°C ein Potential von mindestens 400 mV (Wasserstoffelektrode) aufweist.

4. Verfahren nach einem oder mehreren der Ansprüche 1 bis 3, dadurch gekennzeichnet, daß das Kupfer(II)- zu Kupfer(I)-Verhältnis in der zur Austauschreaktion verwendeten, kupferhaltigen, vorwiegend chloridischen Lösung so eingestellt wird, daß praktisch keine Säurebildung stattfindet.

5. Verfahren nach einem oder mehreren der Ansprüche 1 bis 4, dadurch gekennzeichnet, daß das Kupfer(II)- zu Kupfer(I)-Verhältnis in der kupferhaltigen, vorwiegend chloridischen Lösung so eingestellt wird, daß das im anfallenden Kupferkonzentrat vorhandene Kupfer hauptsächlich als Kupfer(II)-sulfid vorliegt.

6. Verfahren nach einem oder mehreren der Ansprüche 1 bis 4, dadurch gekennzeichnet, daß das Kupfer(II)- zu Kupfer(I)-Verhältnis in der kupferhaltigen, vorwiegend chloridischen Lösung so eingestellt wird, daß das im anfallenden Kupferkonzentrat vorhandene Kupfer hauptsächlich als Kupfer(I)-sulfid vorliegt.

7. Verfahren nach einem oder mehreren der Ansprüche 1 bis 6, dadurch gekennzeichnet, daß die kupferhaltige, vorwiegend chloridische Lösung mittels oxidierender Laugung kupferhaltiger, sulfidischer Konzentrate in der chloridischen Lösung hergestellt wird.

8. Verfahren nach einem oder mehreren der Ansprüche 1 bis 7, dadurch gekennzeichnet, daß die nach der Austauschreaktion anfallende, zumindest teilweise von Kupfer befreite, NE-metallhaltige Lösung zur Gewinnung des während des Austausches gelaugten Zinks noch soviel Kupfer als Kupfer(I)-chlorid aufweist, um eine Zinkextraktion mittels eines Kationenaustauschers unter gleichzeitiger Oxidation des einwertigen Kupfers mit einem sauerstoffhaltigen Gas zu ermöglichen.

9. Verfahren nach einem oder mehreren der Ansprüche 1 bis 7, dadurch gekennzeichnet, daß die nach der Austauschreaktion anfallende, zumindest teilweise vom Kupfer befreite, NE-metallhaltige Lösung zur Entfernung des während des Austauschs ausgelaugten Eisens noch soviel Kupfer als Kupfer(I)-chlorid aufweist, um eine Eisenfällung mittels Sauerstoffoxidation unter gleichzeitiger Oxidation des einwertigen Kupfers zu ermöglichen.

**Claims**

1. A process for the production of sulphidic copper concentrates from complex sulphidic concentrates which, in addition to copper, iron and, optionally, noble metals, contain at least one of the non-ferrous metals selected from zinc, lead, nickel and cobalt as their main constituent, characterised in that the complex sulphidic concentrates are added to, and mixed with, a coppercontaining, predominantly, chloridic solution, and the suspension thus obtained is treated at elevated temperature and pressure at a pH-value of below 3.

2. A process according to Claim 1, characterised in that the copper-containing, predominantly chloridic solution contains noble metals, and the noble metals are extracted with the accumulating copper concentrate.

3. A process according to Claim 1 or 2, characterised in that the ratio by weight of the complex concentrate added to the copper-containing, predominantly chloridic solution to the copper content of the solution is adjusted in such a way that the predominantly chloridic solution at least partly freed from copper by an exchange reaction has a potential at 60 C of at least 400 mV (as measured by hydrogen electrode).

4. A process according to one or more of Claims 1 to 3, characterised in that the copper (II) to copper (I) ratio in the copper-containing, predominantly chloridic solution used for the exchange reaction is adjusted in such a way that virtually no acid is formed.

5. A process according to one or more of Claims 1 to 4, characterised in that the copper (II) to copper (I) ratio in the copper-containing, predominantly chloridic solution is adjusted in such a way that the copper present in the accumulating copper concentrate is mainly in the form of copper (II) sulphide.

6. A process according to one or more of Claims 1 to 4, characterised in that the copper (II) to copper (I) ratio in the copper-containing, predominantly chloridic solution is adjusted in such a way that the copper present in the copper concentrate accumulating is mainly in the form of copper (I) sulphide.

7. A process according to one or more of Claims 1 to 6, characterised in that the copper-containing predominantly chloridic solution is prepared by the oxidative leaching of copper-containing sulphidic concentrates in the chloridic solution.

8. A process according to one or more of Claims 1 to 7, characterised in that the NF-metal-containing solution at least partly freed from copper which accumulates after the exchange reaction and from which the zinc leached during the exchange is recovered still contains enough copper in the form of copper (I) chloride to enable the zinc to be extracted by means of a cation exchanger accompanied by oxidation of the monovalent copper with an oxygen-containing gas.

9. A process according to one or more of Claims 1 to 7, characterised in that the NF-metal-containing solution at least partly freed from copper which accumulates after the exchange reaction and from which the iron leached during the exchange is removed still contains enough copper in the form of copper (I) chloride to enable the iron to be precipitated by oxidation with oxygen accompanied by oxidation of the monovalent copper.


**Revendications**

1. Procédé pour la préparation de concentrés de cuivre sulfurés à partir de concentrés sulfurés complexes qui contiennent, outre le cuivre, le fer et éventuellement des métaux nobles, au moins un des métaux non ferreux zinc, plomb, nickel et cobalt comme constituant principal, caractérisé en ce que l'on mélange les concentrés sulfurés complexes avec une solution essentiellement à base de chlorures contenant du cuivre, et on traite la suspension ainsi obtenue à température élevée sous pression élevée et à un pH inférieur à 3.

2. Procédé selon la revendication 1, caractérisé en ce que la solution essentiellement à base de chlorures contenant du cuivre contient des métaux nobles et les métaux nobles sont extraits avec le concentré de cuivre qui se forme.

3. Procédé selon la revendication 1 ou 2, caractérisé en ce que le rapport du poids du concentré complexe ajouté à la solution essentiellement à base de chlorures contenant du cuivre à la teneur en cuivre de la solution est ajusté de telle sorte que la solution essentiellement à base de chlorures au moins partiellement débarrassée de cuivre par la réaction d'échange présente à 60° C un potentiel d'au moins 400 mV (électrode à hydrogène).

4. Procédé selon une ou plusieurs des revendications 1 à 3, caractérisé en ce que le rapport du cuivre (II) au cuivre (I) dans la solution essentiellement à base de chlorures contenant du cuivre utilisée pour la réaction d'échange est ajusté de telle sorte qu'il n'y ait pratiquement pas de formation d'acide.

5. Procédé selon une ou plusieurs des revendications 1 à 4, caractérisé en ce que le rapport du cuivre (II) au cuivre (I) dans la solution essentiellement à base de chlorures contenant du cuivre est ajusté de telle sorte que le cuivre présent dans le concentré de cuivre qui se forme soit principalement sous forme de sulfure de cuivre (II).

6. Procédé selon une ou plusieurs des revendications 1 à 4, caractérisé en ce que le rapport du cuivre (II) au cuivre (I) dans la solution essentiellement à base de chlorures contenant du cuivre est ajusté de telle sorte que le cuivre présent dans le concentré de cuivre qui se forme soit principalement à l'état de sulfure (I).

7. Procédé selon une ou plusieurs des revendications 1 à 6, caractérisé en ce que la solution essentiellement à base de chlorures contenant du cuivre est préparée par lixiviation oxydante de concentrés sulfurés contenant du cuivre dans la solution de chlorures.

8. Procédé selon une ou plusieurs des revendications 1 à 7, caractérisé en ce que la solution contenant des métaux non ferreux, au moins partiellement débarrassée du cuivre, qui se forme après la réaction d'échange, contient encore assez de cuivre sous forme de chlorure de cuivre (I) pour la récupération du zinc lixivié pendant l'échange, pour permettre une extraction du zinc au moyen d'un échangeur de cations avec oxydation simultanée du cuivre monovalent par un gaz contenant de l'oxygène.

9. Procédé selon une ou plusieurs des revendications 1 à 7, caractérisé en ce que la solution contenant des métaux non ferreux au moins partiellement débarrassée du cuivre, qui se forme après la réaction d'échange, contient encore assez de cuivre à l'état de chlorure de cuivre (I) pour l'élimination du fer extrait par lixiviation pendant l'échange, pour permettre une précipitation du fer par oxydation par l'oxygène avec oxydation simultanée du cuivre monovalent.

FIG. 1

FIG. 2

FIG. 3

FIG. 4

FIG. 5

FIG. 6